# EUROPEAN PATENT APPLICATION

(11) **EP 1 768 056 A1**
(43) Date of publication of application: **28.03.2007**
(21) Application number: 05108546.2
(22) Date of filing: 16.09.2005
(51) Int. Cl.: G06Q 10/00

(54) **External E-mail detection and warning**

(71) Applicant: Research In Motion Limited, Waterloo, Ontario N2L 3L3 (CA)
(72) Inventor: Adams, Neil, Waterloo, Ontario N2K 4E4 (CA); Brown, Michael S., Waterloo, Ontario N2K 4B1 (CA)
(74) Representative: Rickard, David John

(57) **Abstract**

A method for external message address detection and warning is disclosed. The method is implemented in a messaging system and carried out in reaction to a message sender action. The system includes a messaging application (56) permitting a message sender to create a message composition intended to be sent to at least one message address. The message address includes a first portion (113) identifying the message address as belonging to a group of addresses and a second portion (115) identifying the message address as belonging to a specific address within the group. The method includes the steps of determining if said first portion (113) of said message address identifies the message address as belonging to a predetermined group of addresses that is indicative of an internal message recipient; and communicating a warning (134) to said sender if said first portion (113) does not identify the message address as belonging to the predetermined group of addresses.

## Description

The present invention relates to messaging applications that send and receive messages and, in particular, to a method for external message address detection and warning.

An e-mail address has two portions and an @ symbol at the dividing point between the two portions. One portion is the username that is typically set up with the Internet provider or e-mail service. The username is frequently in the form of the name or nickname of the person associated with the e-mail address. The other portion is the domain portion or domain name of the e-mail address. The domain name is the name of the server or servers that handle e-mail to a group of e-mail accounts. Domain names have two or more parts, separated by dots. The part on the left is the most specific, and the part on the right is the most general.

For uniformity, convenience and other reasons, all individuals within a particular company typically have the same domain name in their company provided e-mail address. If two people have different domain names in their work e-mail address, this may mean that they work for different companies. In a number of currently available messaging applications, only the first few letters of an intended recipient's name needs to be typed in before the application interactively searches and possibly locates at least one e-mail address match which can be immediately selected. The interactively generated search results might not however be displayed showing the domain portions of the e-mail address matches. In the case where an e-mail sender wants to send internal information to a co-worker within the company that employs him, and his address book contains a person having a similar name but associated with an external e-mail address, the e-mail sender might accidentally send an unintended e-mail and leak the internal information that was intended for the co-worker, to the person with the external e-mail address.

Accordingly, it would be advantageous if there existed methods and systems for external message address detection and warning that would have a positive impact on situations such as the one described above.

According to one example of the invention is an external recipient detection method implemented in a messaging system and carried out in reaction to a message sender action. The system includes a messaging application permitting a message sender to create a message composition intended to be sent to at least one message address. The message address includes a first portion identifying the message address as belonging to a group of addresses and a second portion identifying the message address as belonging to a specific address within the group. The method includes the steps of determining if said first portion of said message address identifies the message address as belonging to a predetermined group of addresses that is indicative of an internal message recipient; and communicating a warning to said sender if said first portion does not identify the message address as belonging to the predetermined group of addresses.

According to another example of the invention is an electronic device having a messaging application permitting a message sender to create a message composition intended to be sent to at least one message address. The message address includes a first portion identifying the message address as belonging to a group of addresses and a second portion identifying the message address as belonging to a specific address within the group. The device includes a display screen and a processor in electronic communication with the display screen for controlling operation of the display screen. The device also includes an external messaging detection and warning module associated with the processor for determining if said first portion of said message address identifies the message address as belonging to a predetermined group of addresses that is indicative of an internal message recipient; and causing a warning to be communicated to a user of the device if said first portion does not identify the message address as belonging to the predetermined group of addresses.

According to another example of the invention is a computer program product having a computer readable medium storing a messaging application permitting a message sender to create a message composition intended to be sent to at least one message address. The message address includes a first portion identifying the message address as belonging to a group of addresses and a second portion identifying the message address as belonging to a specific address within the group. The messaging application includes code for determining if said first portion of said message address identifies the message address as belonging to a predetermined group of addresses that is indicative of an internal message recipient; and code for enabling communication of a warning to said sender if said first portion does not identify the message address as belonging to the predetermined group of addresses.

### BRIEF DESCRIPTION OF THE DRAWINGS

Reference will now be made, by way of example, to the accompanying drawings which show example embodiments of the present invention, and in which:

Figure 1 shows a block diagram of a user device to which the present invention can be applied in an example embodiment;

Figure 2 shows, in diagrammatic form, a first user interface screen of a possible messaging application for the device of Figure 1;

Figure 3 shows, in diagrammatic form, a second user interface screen of the messaging application of Figure 2, the second user interface screen being that of a displayed message;

Figure 4 shows, in diagrammatic form, a user interface screen of a reply-to message composition of the displayed message;

Figure 5 shows, in diagrammatic form, a user interface screen taken after a dialog window appears superimposed over the reply-to message composition; and

Figure 6 shows, in flowchart form, an example embodiment of a method for external recipient detection.

Similar reference numerals may have been used in different figures to denote similar components.

### DESCRIPTION OF EXAMPLE EMBODIMENTS

The following description of example embodiments of the invention does not limit the implementation of the invention to any particular computer programming language or system architecture. The present invention is not limited to any particular operating system, mobile device architecture, or computer programming language. Moreover, although some of the embodiments described below include mobile devices, the present invention is not limited to mobile devices; rather, it may be embodied within a variety of user devices or terminals, including handheld devices, mobile telephones, personal digital assistants (PDAs), personal computers, audio-visual terminals, televisions, and other devices. One skilled in the art will appreciate that messaging applications can be installed on most of these user devices and terminals.

Any references herein to "messages" are not intended to be limited to e-mail, but should be understood to include other types of messages that one skilled in the art would understand to be possible in the context in which the term is being used. Other types of messages include text messages, audio messages, video messages, and other items, including calendar entries, tasks, and other date-related items.

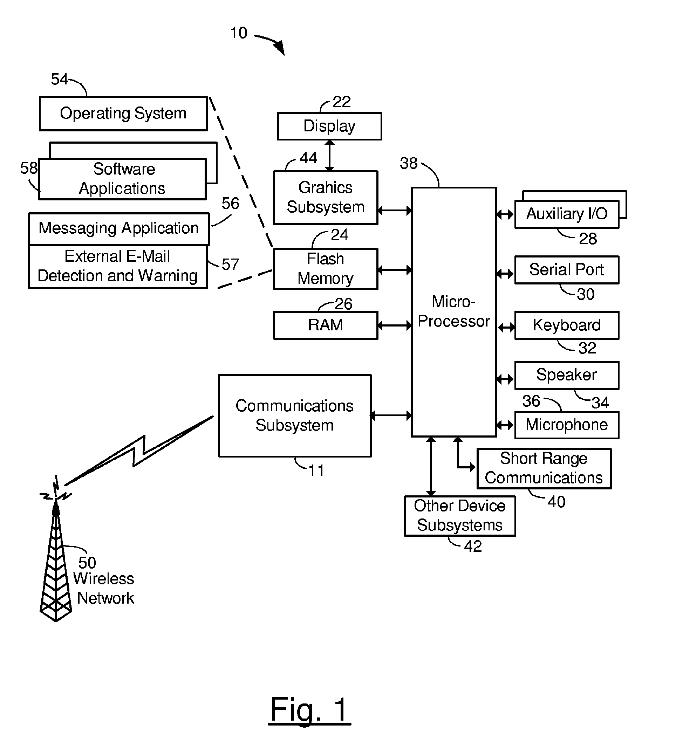

Referring now to the drawings, Figure 1 is a block diagram of a user device to which example embodiments of the invention can be applied. In at least one example, the user device is a two-way mobile communication device 10 having data and possibly also voice communication capabilities. In an example embodiment, the device 10 has the capability to communicate with other computer systems on the Internet. Depending on the functionality provided by the device 10, in various embodiments the device may be a data communication device, a multiple-mode communication device configured for both data and voice communication, a mobile telephone, a PDA enabled for wireless communication, or a computer system with a wireless modem, among other things.

In the illustrated embodiment, the device 10 includes a wireless communication subsystem 11. In one embodiment, the communication subsystem 11 may include a receiver, a transmitter, and associated components such as one or more, preferably embedded or internal, antenna elements, and a processing module such as a digital signal processor (DSP). As will be apparent to those skilled in the field of communications, the particular design of the communication subsystem 11 will be dependent in part upon the communication network in which the device 10 is intended to operate.

Signals received by the device 10 from a wireless communication network 50 are input to the receiver of the communication subsystem 11, which may perform such common receiver functions as signal amplification, frequency down conversion, filtering, channel selection and the like. In a similar manner, signals to be transmitted are processed, including modulation and encoding for example, by the DSP and input to the transmitter for digital to analog conversion, frequency up conversion, filtering, amplification and transmission over the wireless communication network 50.

The device 10 includes a microprocessor 38 that controls the overall operation of the device. The microprocessor 38 interacts with the communications subsystem 11 and also interacts with further device subsystems such as a graphics subsystem 44, flash memory 24, random access memory (RAM) 26, auxiliary input/output (I/O) subsystems 28, serial port 30, keyboard or keypad 32, speaker 34, microphone 36, a short-range communications subsystem 40, and any other device subsystems generally designated as 42. The graphics subsystem 44 interacts with the display 22 and renders graphics and/or text upon the display 22.

Operating system software 54 and various software applications 58 used by the microprocessor 38 are, in one example embodiment, stored in a persistent store such as flash memory 24 or similar storage element. Those skilled in the art will appreciate that the operating system 54, software applications 58, or parts thereof, may be temporarily loaded into a volatile store such as RAM 26. It is contemplated that received communication signals may also be stored to RAM 26.

The microprocessor 38, in addition to its operating system functions, can enable execution of software applications 58 on the device. A predetermined set of software applications 58 which control basic device operations, including data and voice communication applications for example, will normally be installed on the device 10 during manufacture. Further software applications 58 may also be loaded onto the device 10 through the network 50, an auxiliary I/O subsystem 28, serial port 30, short-range communications subsystem 40 or any other suitable subsystem 42, and installed by a user in the RAM 26 or a non-volatile store for execution by the microprocessor 38. Such flexibility in application installation increases the functionality of the device and may provide enhanced on-device functions, communication-related functions, or both. For example, secure communication applications may enable electronic commerce functions and other such financial transactions to be performed using the device 10.

In a data communication mode, a received signal such as a text message or web page download will be processed by the communication subsystem 11 and input to the microprocessor 38, which will preferably further process the received signal for output to the display 22 through the graphics subsystem 44, or alternatively to an auxiliary I/O device 28. A user of device 10 may also compose data items within a software application 58, such as e-mail messages for example, using the keyboard 32 in conjunction with the display 22 and possibly an auxiliary I/O device 28 such as, for example, a thumbwheel. Such composed items may then be transmitted over a communication network through the communication subsystem 11.

The serial port 30 in Figure 1 would normally be implemented in a personal digital assistant (PDA)-type communication device for which synchronization with a user's desktop computer (not shown) may be desirable, but is an optional device component. Such a port 30 would enable a user to set preferences through an external device or software application and would extend the capabilities of the device by providing for information or software downloads to the device 10 other than through a wireless communication network.

A short-range communications subsystem 40 is a further component which may provide for communication between the device 10 and different systems or devices, which need not necessarily be similar devices. For example, the subsystem 40 may include an infrared device and associated circuits and components or a Bluetooth^{™} communication module to provide for communication with similarly enabled systems and devices. The device 10 may be a handheld device.

Wireless mobile network 50 is, in an example embodiment, a wireless wide area packet data network, (e.g. Mobitex^{™} or DataTAC^{™}), which provides radio coverage to mobile devices 10. Wireless mobile network 50 may also be a voice and data network such as GSM (Global System for Mobile Communication) and GPRS (General Packet Radio System), CDMA (Code Division Multiple Access), or various other third generation networks such as EDGE (Enhanced Data rates for GSM Evolution) or UMTS (Universal Mobile Telecommunications Systems). In some example embodiments, network 50 is a wireless local area network (WLAN) operating, for example, in conformance with one or more IEEE 802.11 protocols. In some example embodiments, the device 10 is configured to communicate over both wireless wide are networks and wireless local area networks.

In one embodiment, the software resident on the device 10 includes a messaging application 56 for sending, receiving and displaying messages or other items, such as tasks, calendar items, etc. An example of a very well known software application similar to the messaging application 56 is the Microsoft Outlook^{™} software application produced by the Microsoft Corporation. There exists a variety of publications that provide instructions for developing and creating messaging applications. Furthermore, special software is currently available for building messaging applications. Accordingly, code-level programming specifics need not be described in substantial detail herein in order for one skilled in the art to build a messaging application having any of the functionality disclosed herein.

It is again noted that the present application is not limited to use in association with e-mail messages and may apply to other messages where possible, including SMS messages, and other "items", including calendar entries, task list entries, and other items having a date associated with them. References in the present application to "messages" or a "messaging application" should be understood to encompass and include possibilities within this wider range of items.

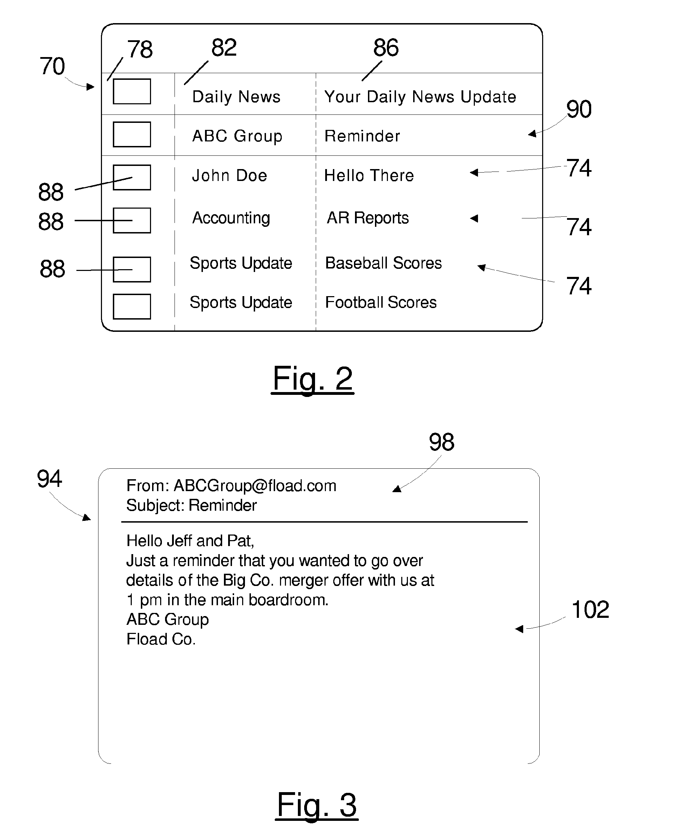

Referring to Figure 2, a user interface screen 70 generated by an example embodiment of the messaging application 56 is illustrated. The user interface screen 70 corresponds to what the display of a mobile communication device might look like after a user has requested that the messaging application 56 display received messages in a list. This is typically done by clicking on an icon or a particular list selection associated with a request to display inbox folder contents.

In the user interface screen 70, a plurality of messages 74 are listed vertically. Going from left to right in the user interface screen 70, there is a message icon column 78, a sender identifier column 82 and a message subject column 86. Icons 88 in the icon column 78 can provide information about the e-mails with which they are associated. For example, an icon 88 associated with an e-mail that has already been read can provide this information to the user by means of an appropriate graphical image displayed to the user (e.g. an envelope with its flap opened). Similarly an appropriate graphical image could be used for an e-mail that has not been read (e.g. an envelope with its flap closed). The columns 82 and 86 also provide information about the messages 74. In the column 82, the names of the people who sent the e-mails 74 are listed. In the column 86, the subject lines of the e-mails 74 are shown.

It will be understood that the display of the mobile communication device could show additional/fewer and/or different columns than those shown in Figure 2. Some examples of alternative columns are importance, flag status, presence of attachment(s), received date, and message size. Due to the typical width of the display of a mobile communication device, it will normally not be desirable to have a large number of columns, and it will normally be desirable to show the columns that provide the most useful information keeping in mind that the user is probably looking for a particular message at the stage shown in Figure 2.

Message 90 of the messages 74 has been highlighted by the user. The sender of the message 90 is ABC Group, and the subject line of the message is "Reminder". The user in this example now requests, using one or more of the input devices of his mobile communication device, that the message 90 be open.

Figure 3 is a user interface screen 94 of the displayed message 90. Message header 98 repeats the information of the message 90 contained in the columns 82 and 86 of the user interface screen 70. It will be understood that the header 98 could show additional/less and/or different information than what is shown. Below the header 98 is a message section 102 that contains the text of the message, and the section 102 is commonly referred to as the message body.

The information contained in the message body 102 is information of an internal nature (i.e. information that should not be disclosed to anyone outside of the company/organization unless necessary). In this specific example, the message body 102 of the message 90 discusses a potential merger with Big Co. Information about a potential merger is just one example of various sorts of confidential information that a company would not want to disclose to individuals outside of the company.

It will be understood that confidential information contained in a message will not always be found in the message text. For example, the confidential information could be contained in a message attachment, which might be a word processing document. Besides documents and the like, it will be understood that messaging applications can be used to send out other types of material over a public communications medium such as the Internet. Audio files, image files and video files are just some examples of other types of materials. A company might have various audio files, image files, video files, etc. that it needs to be kept confidential.

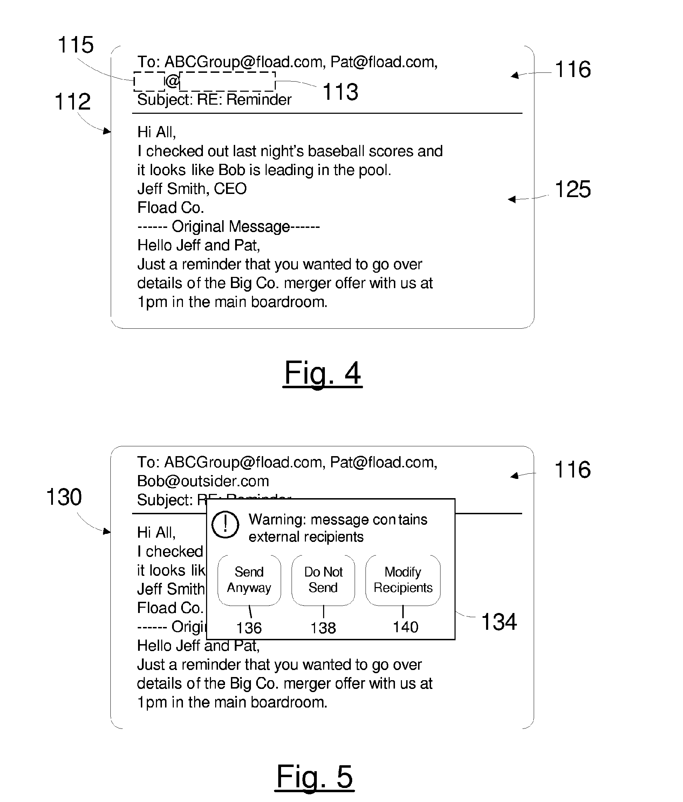

Still with reference to the example message from ABC Group, Figure 4 is a user interface screen 112 illustrating a reply-to message composition derived from the original message 90. The list of e-mail addresses to which the message composition is intended to be sent is contained in the "To:" line of header 116. In particular, the user wishes to send this message to pat@fload.com (one of the original message recipients), ABCgroup@fload.com (the original message sender) and bob@outsider.com. Each of these three message addresses has two portions. One of the portions identifies a message address as belonging to a group of addresses, and in this particular example involving e-mail addresses, this portion is called the domain portion or domain name. The other portion identifies the message address as belonging to a specific address within the group, and in this particular example involving e-mail addresses, this portion is called the username. Taking the e-mail address bob@outsider.com as an example, portion 113 is the domain portion and portion 115 is the username.

One skilled in the art will appreciate that not all systems for sending messages require users to enter intended recipient addresses in the form of a username and domain name. For example, in systems not based on name resolution and the use of Domain Name System (DNS) servers, users might enter the address for an intended message recipient as a 32-bit binary number. One portion of the binary number would identify the message address as belonging to a group of addresses, and the other portion of the binary number would identify the message address as belonging to a specific address within the group.

Although not illustrated in the drawings, most messaging applications for creating e-mail compositions permit a user to create a message composition having a header that also has "Cc:" and "Bcc:" lines, and e-mail addresses can be entered into either or both of these lines in addition to the "To:" line. The methods of detection and warning disclosed herein can be carried out on message addresses listed on any of these three lines.

Referring to Figure 4, the bob@outsider.com address is an e-mail address not previously associated with the "Reminder" message thread. The bob@outsider.com address also happens to be an external e-mail address, and the individual (Bob) who receives e-mail at this external e-mail address does not work for Fload Co. If the user's reply-to message composition is sent, not only will Bob be informed that he is leading in the baseball pool, he will also learn about the potential merger with Big Co. This is because the original message text is contained in the derived message. Specifically, the original message text appears below an indicator or separator line 124 that the illustrated example messaging application has inserted into message body 125.

In the illustrated example, the user attempts to use one or more of the input devices of his mobile communication device to send his reply-to message composition. In reaction to the request to send the message, the messaging application carries out a method for external message address detection by processing the destination e-mail addresses listed in the header 116 and determining that there is going to be an external recipient (bob@outsider.com).

Having determined that there is an external recipient in the reply-to message, a warning about the external recipient is communicated to the user. User interface screen 130 in Figure 5 illustrates this. In the illustrated example embodiment, dialog window 134 warns the user that his message includes at least one external recipient. The user needs to select one of three presented options 136, 138 and 140, which are "send anyways", "do not send", and "modify recipients". In an alternative example embodiment, the dialog window 134 also indicates which of the recipients have been determined to be external recipients. In the illustrated example, the dialog window 134 would identify bob@outsider.com as the external recipient. In yet another alternative embodiment, the dialog window 134 provides the user with the options 136 and 138, but not the option 140.If the user selects option 136 "send anyways", the message will be sent to the external recipient. If the user selects option 138 "do not send", the user is returned to the email composition interface screen 112 of Figure 4 and given, among other things, the opportunity to either amend the email to remove from the message body the sensitive content that the external recipient should not see, or to remove the external recipient from the destination address list. In the event that the user selects the option 140 "modify recipients", then the messaging application 56 automatically modifies the destination email address list to delete the external recipient.

It will be understood that there are other ways in which a message composition such as the one illustrated in Figures 4 and 5 could be dealt with by the messaging application. For example, the network manager could specify that these types of messages are not allowed, and in this case, the user would not be allowed to send the message. In order for the user to send the message, the user would need to remove bob@outsider.com as an intended message recipient.

If prevention (and not just detection) is one of the desired goals, it could be desirable to have part or all of the chosen method for detection, prevention and notification implemented by one or more entities other than the user device, specifically one or more server entities. Accordingly, in alternative embodiments, a server can be added along a pathway for outbound corporate messages, or alternatively servers associated with other functions, such as outbound gateway servers, bridgehead servers, DNS servers and others could be reconfigured and/or redesigned to implement at least a portion of the method.

In another alternative example embodiment, a visual indicator is displayed to the user immediately after bob@outsider.com is entered into the "To:" line of the message header 116. In other words, external recipient detection and warning could occur interactively during the composition process. This alternative way of warning could also be combined with one of the previously mentioned ways of warning. In an embodiment where the messaging application permits an interactive search of a user's address book for one or more possible recipients when the first few letters of the person's name are entered into the "To:", "Cc:" or "Bcc:" line, interactive warning and detection could occur concurrently with the returning of the search results. It will therefore be understood that the methods of detection and warning disclosed herein can occur in reaction to not only a request by the user to send a message composition, but in reaction to other message sender actions as well. Although the method of detection and warning illustrated in Figure 5 is carried out in relation to a reply-to message composition, it will be understood that detection and warning methods can be carried out in relation to other types of message compositions, such as "forward" message compositions and original message compositions (message compositions not derived from any previous message compositions).

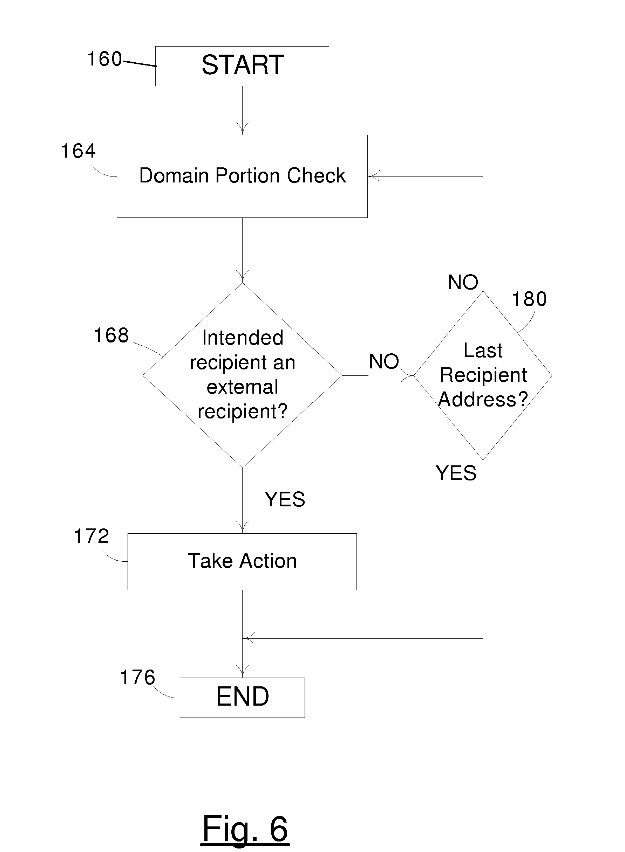

Figure 6 is a flow chart further illustrating an external e-mail detection method in accordance with an example embodiment of invention. In at least one configuration, the method can be implemented through computer instructions embodied in an external messaging detection and warning module 57 stored on device 10. In various example embodiments, the module 57 may be a subcomponent of messaging application 56, or other applications 58, or may be a stand alone application 57 that interacts with messaging application 56. The method starts at step 160, where the user requests that his message be sent out. At step 164, the messaging application does a domain portion (or domain name) check against the first intended message recipient. The messaging application looks to see if the domain portion of the intended recipient's e-mail address matches any one of the domain names that are recognized as being indicative of an internal message recipient. In this respect, a periodically updated list of domain names recognized as being indicative of an internal message recipient can be stored in local storage of the device 10. If there is a match with one of the group identifications (domain names in this case) that the messaging application recognizes as being indicative of an internal message recipient, the intended recipient is determined at decision step 168 to be an internal recipient. Otherwise, the intended recipient is determined at the decision step 168 to be an external recipient. If the intended recipient is an external recipient, appropriate action is taken at step 172, otherwise the external e-mail detection method of Figure 6 continues at step 180. In the event that the intended recipient is an external recipient, the appropriate action can be any of the action(s) that have been previously discussed. For example, as discussed above in respect of Figure 5, a warning dialog window 134 can be displayed with selectable options. If the user selects option 136 "send anyways", the external recipient is kept in the destination address list and the external e-mail detection method of Figure 6 continues at step 180. If the user selects option 138 "do not send", the external e-mail detection method of Figure 6 ends (step 176) and the user is returned to the email composition interface screen 112 of Figure 4 and given, among other things, the opportunity to either amend the email to remove from the message body the sensitive content that the external recipient should not see, or to remove the external recipient. In the event that the user selects the option 140 "modify recipients", then the messaging application 56 automatically modifies the destination address list to delete the external recipient, and proceeds to step 180 in the external e-mail detection method of Figure 6.

A check is done at step 180 to see if there are any additional recipient addresses to check. If there are additional recipient addresses to check, the next step is the domain portion check of the next recipient in the recipient list at the step 164. If there are no additional recipient addresses to check, no action needs to be taken, so the external recipient detection process ends at the step 176.

Where the method of detection is carried out interactively during the composition process, the method would normally not be carried out all at once at the end, but instead only one address would be checked for each execution of the method. In that case the flow chart decision step 180 would not follow a determination at the decision step 168 that the intended recipient is an external recipient. Instead there would be an end at the step 176.

Furthermore, in some embodiments, the dialog box 134 may only be displayed once the entire list of recipient addresses has been reviewed, and option 140 "modify recipients" would result in all external recipients being stripped from the recipients address list at once.

It will be understood that a company might have e-mail accounts for more than one top-level domain (TLD). Using the Fload Co. example, the company's e-mail system might support e-mails for both fload.com and fload.net. Also there might be situations such as those involving mergers and acquisitions where the company supports two or more domain names and where the parts of the domain names to the left of the TLDs are entirely different. It is contemplated that a potential external message address could be checked against all of the possible internal message addresses.

In the above described example, message recipients have been generally described as "internal" when they are associated with an internal corporate electronic address and "external" when associated with an electronic address that is not internal to the company. It will be appreciated that in various embodiments of the invention, the division between "internal" and "external" need not be limited to intra-company or inter-company - rather the division between internal and external could be in relation to other predefined groups or organizations. For example, a domain used to identify "internal" message recipients may be associated with a non-corporate organization such as a university or government, or even a sub-group within a corporation or other organization.

Furthermore, the division between "internal" and "external" could be such that the "internal" group is a sub-group of a company or organization having addresses with a pre-determined domain, and external recipients be those not having addresses with such domain, regardless of whether they are in the same company/organization or not. In yet another configuration, permitted addresses for internal emails could be spread across different companies or organizations. For example, a company may have a secure email path to a trusted legal advisor and the legal advisor's domain name can be included in the list of domains that are considered to be internal domains so that an email message listing the legal advisor as a recipient will be sent to the legal advisor without the legal advisor being classified as an external recipient. In some embodiments, the list of permitted "internal" domains that are stored in a user's device and /or an associated server could include temporary domains that are automatically deleted from the list of permitted "internal" domains after a predetermined amount of time has passed - so, for example, the legal advisor's email address would temporarily be considered an internal address for a set duration.

The present invention may be embodied in other specific forms without departing from the spirit or essential characteristics thereof. Certain adaptations and modifications of the invention will be obvious to those skilled in the art. Therefore, the above discussed embodiments are considered to be illustrative and not restrictive, the scope of the invention being indicated by the appended claims rather than the foregoing description, and all changes which come within the meaning and range of equivalency of the claims are therefore intended to be embraced therein.

## Claims

1. An electronic device (10) having a messaging application (56) permitting a message sender to create a message composition intended to be sent to at least one message address, the message address comprising a first portion (113) identifying the message address as belonging to a group of addresses and a second portion (115) identifying the message address as belonging to a specific address within the group, the device (10) comprising:
a display screen (22);
a processor (38) in electronic communication with said display screen (22) for controlling operation of said display screen (22);
and wherein:
a messaging detection and warning module (57) associated with the processor (38) for determining if said first portion (113) of said message address identifies the message address as belonging to a predetermined group or groups of addresses; and causing a warning (134) to be communicated to a user of the device (10) if said first portion (113) does not identify the message address as belonging to the predetermined group or groups of addresses.

2. The device as claimed in claim 1, wherein said messaging detection and warning module comprises an external messaging detection and warning module that is arranged to determine if said first portion (113) of said message address identifies the message address as belonging to a predetermined group of addresses that is indicative of an internal message recipient.

3. The device as claimed in claim 1 or claim 2, wherein said message composition is an e-mail composition, said first portion (113) is a domain portion, and said second portion (115) is a username.

4. The device as claimed in any one of claims 1 to 3, wherein said warning (134) is contained in a dialog window on said display screen (22).

5. The device as claimed in claim 4, wherein the messaging detection and warning module (57) is configured for causing options (136, 138, 140) to be displayed in said dialog window, said options (136, 138, 140) in relation to modification and sending of said message composition and superimposed over said message composition.

6. The device as claimed in any one of claims 1 to 5, wherein the messaging detection and warning module (57) is configured for preventing said message composition from being sent if said first portion (113) does not identify the message address as belonging to the predetermined group or groups of addresses.

7. A recipient detection method implemented in a messaging system and carried out in reaction to a message sender action, the system comprising a messaging application (56) permitting a message sender to create a message composition intended to be sent to at least one message address, the message address comprising a first portion (113) identifying the message address as belonging to a group of addresses and a second portion (115) identifying the message address as belonging to a specific address within the group, the method wherein:
determining if said first portion (113) of said message address identifies the message address as belonging to a predetermined group or groups of addresses; and
communicating a warning (134) to said sender if said first portion (113) does not identify the message address as belonging to the predetermined group or groups of addresses.

8. The method as claimed in claim 7, wherein said determining step further comprises determining if said first portion (113) of said message address identifies the message address as belonging to a predetermined group of addresses that is indicative of an internal message recipient.

9. The method as claimed in claim 7 or claim 8, wherein said message sender action comprises any of: said sender making a request to send said message composition and/or said sender adding said message address to said message composition.

10. The method as claimed in any one of claims 7 to 9, wherein said message composition is an e-mail composition, said first portion (113) is a domain portion, and said second portion (115) is a username.

11. The method as claimed in any one of claims 7 to 10, wherein said determining step further comprises:
comparing said first portion (113) of said message address against a list of predetermined group identifiers and determining if said first portion (113) matches any of the predetermined group identifiers.

12. The method as claimed in claim 11, wherein the predetermined group identifiers are indicative of internal message recipients.

13. The method as claimed in any one of claims 7 to 12, wherein said at least one message address is a plurality of message addresses, and the steps of determining and communicating are repeated for each of said plurality of message addresses.

14. The method as claimed in any one of claims 7 to 13, wherein the warning (134) is generated as a visual message in a dialog window on a display (22).

15. The method as claimed in any one of claims 7 to 14, further comprising, as part of the warning (134), displaying options (136, 138, 140) to said sender on a display (22), said options being in relation to modification and sending of said message composition and superimposed over said message composition.

16. The method as claimed in any one of claims 7, 10, 11, 14 or 15, wherein the communicating step occurs promptly after said messaging application (56) detects that said sender has added said message address to said message composition.

17. The method as claimed in any one of claims 7, 10, 11, 14, 15 or 16, wherein an additional step of preventing said message composition from being sent if said first portion (113) does not identify the message address as belonging to the predetermined group of addresses, the preventing step occurring after the determining step.

18. The method as claimed in claim 17, wherein an additional step of permitting said message composition to be sent after the preventing step and after determining that all message addresses in said messaging composition that do not belong to the predetermined group of addresses have been removed.

19. The method as claimed in any one of claims 7 to 18, wherein said predetermined group or groups of addresses is associated with at least one domain name.

20. A computer program product having a computer-readable medium tangibly embodying computer executable instructions for implementing the method of any one of claims 7 to 19.

## Amended claims

### Amended claims in accordance with Rule 86(2) EPC.

**1.** An electronic device (10) having a messaging application (56) permitting a message sender to create a message composition intended to be sent to at least one message address, the message address comprising a first portion (113) identifying the message address as belonging to a group of addresses and a second portion (115) identifying the message address as belonging to a specific address within the group, the device (10) comprising:
a display screen (22);
a processor (38) in electronic communication with said display screen (22) for controlling operation of said display screen (22);
and wherein:
an external messaging detection and warning module (57) associated with the processor (38), comprises means for detecting messages addresses that are external to an organization by determining if any message addresses for a message composition have a first portion (113) that identifies the message address as not belonging to a predetermined group or groups of addresses indicative of a message recipient internal to the organization; and means for causing a warning (134) to be communicated to a user of the device (10) if any of the message addresses for the message composition are determined to be external message addresses.

**2.** The device as claimed in claim 1, wherein the warning comprises a warning message displayed on the display screen (22) indicating that an external message address has been detected, the messaging detection and warning module (57) having means for presenting with the warning message a plurality of user selectable options wherein one of the options when selected causes any external message addresses for the message composition to be automatically removed and the message composition to be sent to any remaining message addresses.

**3.** The device as claimed in claim 1 or claim 2, wherein said message composition is an e-mail composition, said first portion (113) is a domain portion, and said second portion (115) is a username.

**4.** The device as claimed in any one of claims 1 to 3, wherein said warning (134) is contained in a dialog window on said display screen (22).

**5.** The device as claimed in claim 4, wherein the messaging detection and warning module (57) is configured for causing options (136, 138, 140) to be displayed in said dialog window, said options (136, 138, 140) being in relation to modification and sending of said message composition and superimposed over said message composition.

**6.** The device as claimed in any one of claims 1 to 5, wherein the messaging detection and warning module (57) is configured for preventing said message composition from being sent if said first portion (113) does not identify the message address as belonging to the predetermined group or groups of addresses.

**7.** An external recipient detection method implemented in a messaging system and carried out in reaction to a message sender action, the system comprising a messaging application (56) permitting a message sender to create a message composition intended to be sent to at least one message address, the message address comprising a first portion (113) identifying the message address as belonging to a group of addresses and a second portion (115) identifying the message address as belonging to a specific address within the group, the method comprising:
detecting if the message composition is addressed to any message addresses external to an organization by determining if any message addresses for the message composition have a first portion (113) that identifies the message address as not belonging to a predetermined group or groups of addresses indicative of a message recipient internal to the organization; and
communicating a warning (134) to said sender if any of the message addresses for the message composition are determined to be external message addresses.

**8.** The method as claimed in claim 7, wherein communicating a warning comprises displaying a warning message on a display screen (22) indicating that an external message address has been detected, the warning message identifying a plurality of user selectable options, the method further comprising, upon user selection of at least one of the options, automatically removing any external message addresses for the message composition and sending the message composition to any remaining message addresses.

**9.** The method as claimed in claim 7, wherein said message sender action comprises any of: said sender making a request to send said message composition and/or said sender adding said message address to said message composition.

**10.** The method as claimed in any one of claims 7 to 9, wherein said message composition is an e-mail composition, said first portion (113) is a domain portion, and said second portion (115) is a username.

**11.** The method as claimed in any one of claims 7 to 10, wherein the warning (134) is generated as a visual message in a dialog window on a display (22).

**12.** The method as claimed in any one of claims 7 to 11, further comprising, as part of the warning (134), displaying options (136, 138, 140) to said sender on a display (22), said options being in relation to modification and sending of said message composition and superimposed over said message composition.

**13.** The method as claimed in claim 12 comprising, upon selection by the sender of a predetermined option, presenting to the sender a user interface screen through which the sender can modify either the message addresses for the message composition or message content for the message composition.

**14.** The method as claimed in claim 7, wherein the communicating step occurs promptly after said messaging application (56) detects that said sender has added said message address to said message composition.

**15.** The method as claimed in claim 7, comprising preventing said message composition from being sent if said first portion (113) does not identify the message address as belonging to the predetermined group of addresses.

**16.** The method as claimed in claim 15, comprising an additional step of permitting said message composition to be sent after the preventing step and after determining that all external message addresses in said message composition have been removed.

**17.** The method as claimed in any one of claims 7 to 16, wherein said predetermined group or groups of addresses is associated with at least one domain name.

**18.** A computer program product having a computer-readable medium tangibly embodying computer executable instructions for implementing in a computing device or system the method of any one of claims 7 to 17.
